# EUROPEAN PATENT APPLICATION

(11) **EP 4 764 425 A1**
(43) Date of publication of application: **24.06.2026**
(21) Application number: 25224367.0
(22) Date of filing: 17.12.2025
(51) Int. Cl.: G01F 15/04, G01F 15/063, G01F 15/00

(54) **MONITORING OF BATTERY DURATION FOR GAS METERS**

(30) Priority: 17.12.2024 IT 202400028653
(71) Applicant: Italgas Reti S.p.A., 10153 Torino (TO) (IT)
(72) Inventor: CERASOLI, Talisa, Torino (IT); GENDUSO, Calogero, Torino (IT); VIGLIAROLO, Monica, Torino (IT); BILELLO, Luca, Torino (IT)
(74) Representative: Bird & Bird Società tra Avvocati S.r.l.

(57) **Abstract**

A gas meter (100) is provided. The meter comprises a battery capacity calculation system (**115, FG(k)**) configured to calculate a residual capacity of said one or more batteries (**B(k)**), the battery capacity calculation system **(115, FG(k)**) comprises at least one electronic measuring device (FG(k)) of a quantity of electric charge delivered by a respective one of said one or more batteries (B(k)), the electronic measuring device (FG(k)) is configured to periodically sample at least either the voltage or the current requested from the respective battery (B(k)) and to calculate a quantity of electric charge delivered by such battery (B(k)) on the basis of sampled values obtained from the periodic sampling of at least one between the voltage and the current. The battery capacitance calculation system (115, FG(k)) is configured to set a sampling frequency of the one electronic measuring device (**FG(k)**) to: - a first sampling frequency value, when the gas meter (**100**) is in a basic operating condition, and - a second sampling frequency value greater than the first sampling frequency value, when the gas meter (**100**) is in an extended operating condition.

## Description

### Background of the present invention

### Field of the present invention

The present invention relates to the field of gas meters. In greater detail, the present invention relates to monitoring the residual capacity of electric batteries of a gas meter.

### Background of the correlated art

It is known that a gas meter is a device installed at a site (a house, apartment, commercial building, industrial building, etc.), which benefits from the supply of combustible gas by a gas supplier, having the function of producing a measurement of the gas effectively delivered at that location.

There are various types of gas meters, according to the technology used to measure the gas delivery. However, the most significant distinction is between a dynamic measuring principle and a static measuring principle.

Irrespective of the technology employed to measure gas delivery, the operation of modern gas meters requires gas meters to be equipped with electrical, electromechanical and/or electronic systems capable of performing different functions (e.g., generating/storing/managing measurement data, remote transmission of measurement data). Consequently, to ensure the proper operation of a gas meter, the components of such systems must receive electrical energy.

To this end, in a modem gas meter one or more electric batteries are provided to allow the gas meter to operate autonomously in a manner independent of the main electricity grid, ensuring an accurate measurement of gas consumption and a remote transmission of the measurement data regardless of the presence or the operating condition of the electricity grid. This is particularly useful if the gas meter is installed in remote areas or in areas affected by frequent power outages.

Known solutions provide estimating the duration of the batteries of a gas meter based on the average daily consumption of the various operations performed by the gas meter and on their duration, calculated under laboratory conditions. For example, the duration of a battery is estimated on the basis of the average consumption obtained by means of laboratory tests and on the basis of the initial capacity of the battery.

### Summary of the present invention

The Applicant has observed that the known solutions are affected by drawbacks which limit the reliability of gas meters.

Solutions which provide for an estimate of the duration of the batteries on the basis of data collected in the laboratory are not reliable, because the batteries installed in the field may be affected by many effects which cannot be predicted a priori in the laboratory (e.g., induced by variations in temperature of the site in which the gas meter is installed and by degradations of network coverage which force the gas meter to make repeated communication attempts, closing and reopening operations of the valve outside the statistical average of operating activities, or multiple combinations thereof), which may alter the actual consumption of the batteries of the gas meter with respect to what was estimated in the laboratory.

In view of the above, the Applicant has devised a solution to remedy this and further inconveniences.

One or more aspects of the present invention are set forth in the independent claims, with advantageous features of the same invention being set forth in the dependent claims, the wording of which is incorporated herein verbatim by reference (with any advantageous feature being set forth with reference to a specific aspect of the present invention which applies mutatis mutandis to any other aspect of the same).

An aspect of the present invention relates to a gas meter.

The gas meter comprises a gas measurement system configured to generate measurements indicating gas deliveries.

The gas meter comprises one or more additional electrical components, each configured for performing a respective additional activity.

Said additional activity is different from said generating measurements indicating dispensing of gas.

The gas meter comprises a power supply unit comprising one or more batteries to power said gas measurement system and said one or more additional electrical components.

The gas meter comprises a battery capacity calculation system configured for calculating a residual capacity of said one or more batteries.

Said battery capacity calculation system comprises at least one electronic device for measuring a quantity of electric charge supplied by a respective one of said one or more batteries.

Said electronic measuring device is configured to periodically sample at least either the voltage or current requested from the respective battery, and calculate a quantity of electric charge delivered by such battery on the basis of sampled values obtained from said periodically sampling of at least either voltage or current.

Said battery capacitance calculation system is configured to set a sampling frequency of said at least one electronic measuring device to:
- a first sampling frequency value when the gas meter is in a basic operating condition, in which none of said one or more additional electric components is performing said respective additional activity, and
- a second sampling frequency value greater than the first sampling frequency value when the gas meter is in an extended operating condition, in which at least one of said one or more additional electric components is performing said respective additional activity.

According to an embodiment of the present invention, said electronic measuring device is configured to store and periodically update in a register a value of said quantity of electric charge delivered by the battery calculated on the basis of the samplings performed.

According to an embodiment of the present invention, said gas measurement system comprises a control unit configured to:
- access said register to retrieve the updated value of said quantity of electric charge delivered by the battery in response to the occurrence of an event;
- calculate said residual capacitance of said one or more batteries **(B(k))** using said retrieved updated value.

According to an embodiment of the present invention, said event comprises at least one selected from:
- the expiry of a predetermined reading period;
- the beginning of an additional activity by one or more of said additional electric components;
- the end of an additional activity by one or more of said additional electric components.

According to an embodiment of the present invention, said event further comprises the expiry of a guard time interval, said guard time interval starting from the occurrence of an end of an additional activity.

According to an embodiment of the present invention, said electronic measurement device is also configured to measure a temperature of the respective battery.

According to an embodiment of the present invention, said control unit is configured to normalize said retrieved updated value on the basis of said measured temperature.

According to an embodiment of the present invention, said control unit is configured to normalize said retrieved updated value on the basis of an average current value delivered by the respective battery during a period elapsed between:
- the occurrence of the event in response to which the control unit accessed the register, and
- the occurrence of a previous event.

According to an embodiment of the present invention, said control unit is configured to:
- estimate an electric consumption of the electronic measuring device;
- calculate said residual capacitance (of said one or more batteries) using, in addition to said retrieved updated value, also said estimated electric consumption of the electronic measuring device.

According to an embodiment of the present invention, said one or more additional electrical components comprise at least one communication unit.

According to an embodiment of the present invention, said respective additional activity comprises a transmission of said measurements indicating gas deliveries by said at least one communication unit through a corresponding wireless transmission technology.

According to an embodiment of the present invention, said one or more additional electrical components comprise a user interface.

According to an embodiment of the present invention, said respective additional activity comprises an activation of said user interface.

According to an embodiment of the present invention, said one or more additional electrical components comprise a valve 104 provided at a gas inlet duct of the gas meter.

According to an embodiment of the present invention, said respective additional activity comprises an actuation of said valve to selectively enable/disable the inlet of the gas through said gas inlet duct of the gas meter.

According to an embodiment of the present invention, said electronic measuring device is a measuring device of the fuel gage type.

According to an embodiment of the present invention, said one or more additional electrical components further comprise one or more additional sensor devices configured to measure at least either a temperature, a pressure or an acceleration.

According to an embodiment of the present invention, said respective additional activity comprises an actuation of at least one of said additional sensor devices which causes the exceeding a corresponding standby-by threshold of said additional sensor device.

### Brief description of the drawings

These and other features and advantages of the present invention will be more apparent from the reading of the following detailed description of illustrative and non-limiting embodiments of the invention. For better intelligibility, the following description should be read with reference to the accompanying drawings, in which:
**Figure 1** is a functional simplified block diagram of a gas meter according to an embodiment of the present invention;
**Figure 2** shows in terms of functional blocks the operations performed by a control unit of the gas meter of **Figure 1** for calculating the residual capacity of a battery of the gas meter according to an embodiment of the present invention.

### Detailed description of non-limiting example embodiments of the present invention

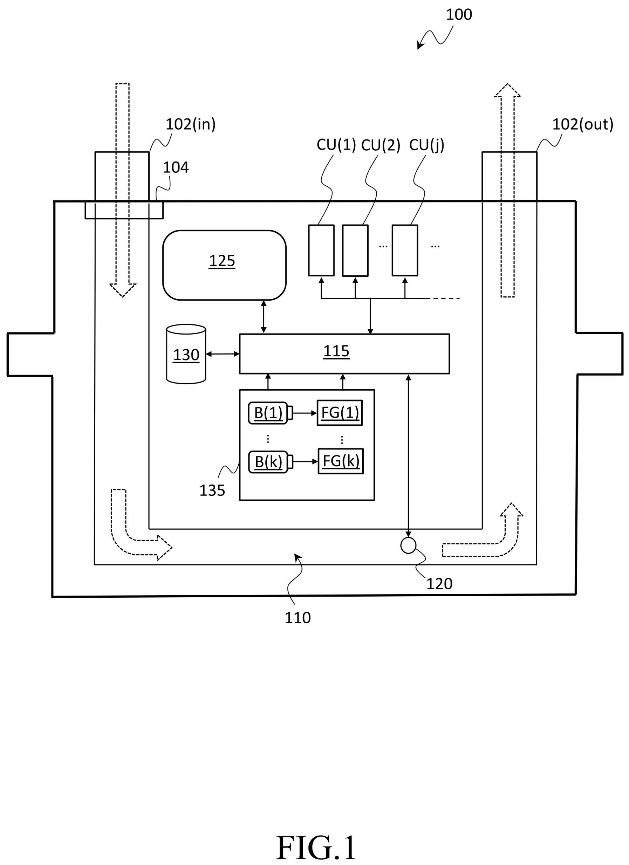

With reference to the drawings, **Figure 1** shows, in terms of simplified functional blocks, an example of a gas meter **100** to measure gas delivered by a gas supplier to a site (such as a house, an apartment, a villa, a commercial business, an industrial plant, a warehouse) in which the gas meter **100** is installed, according to an embodiment of the present invention.

According to an embodiment of the present invention, the gas meter **100** comprises an inlet pipe **102(in)** to receive the gas from a gas supply network (not shown).

According to an embodiment, the gas meter **100(i)** comprises a measuring chamber (or pipe) **110** in fluid communication with the inlet pipe **102(in)** and with an outlet pipe **102(out),** consequently defining a passage for gas from the inlet pipe **102(in)to** the outlet pipe **102(out).** The outlet pipe **102(out)** is connected to a gas distribution network of the site (not shown) in which the gas meter **100** for the delivery of gas received at one or more gas use points within the site is installed.

According to an embodiment of the present invention, the gas meter **100** comprises a control unit **115,** e.g., comprising one or more electronic processors, configured to manage the operations performed by the gas meter **100.**

According to an embodiment of the present invention, a sensor **120** for measuring the flow of gas which flows from the inlet pipe **102(in)** to the outlet pipe **102(out)** is coupled to the measuring chamber **110** (e.g., placed inside the measuring chamber **110).** The sensor **120** is configured to generate detection data *R* indicative of measurements of one or more physical quantities related/influenced/determined by the gas flow which crosses the measurement chamber **110.**

According to an embodiment of the present invention, the sensor **120** is a sensor based on static technology configured to measure family II gas (natural gas), with natural gas/hydrogen mixtures, and/or with family III gas (liquid propane gas). The sensor **120** and the control unit **115** are connected to exchange data and messages, such as commands (from the control unit **115** to the sensor **120)** for controlling the sensor **120** by the control unit **115,** and detection data *R* (from sensor **120** to the control unit **115)** generated by the sensor **120.** Without going into details known to the people skilled in the art, the control unit **115** is configured to process the detection data *R* received from the sensor **120** to calculate corresponding measurement data *M* indicative of an actual amount of gas delivered to the site in which the gas meter **100** is installed through the gas meter **100.**

However, it is emphasized that the concepts of the present invention are directly applicable to meters equipped with sensors made with different technologies, such as diaphragm, rotary piston, turbine, and infrared sensors.

According to an embodiment of the present invention, a valve **104,** e.g., a solenoid valve, is advantageously provided at the inlet pipe **102(in)** and operable by the control unit **115** to selectively enable/disable the entry of gas into the measuring chamber **110** - and, consequently, to selectively enable/disable the delivery of gas received at the points of gas use within the site in which the gas meter **100** is installed.

According to an embodiment of the present invention, the gas meter **100** further comprises a user interface **125** controlled by the control unit **115** and comprising, e.g., a display for displaying information (such as measurement data *M* calculated by the control unit **115),** buttons, and/or interfaces for wired connections (*e.g.*, such as RS232, USB, and optical ports) to allow a user or operator to interact with the gas meter **110(i).**

According to an embodiment of the present invention, the gas meter **100** comprises a memory unit **130** configured to store data, such as measurement data *M*. For example, the memory unit **130** can be coupled to the control unit **115** or can be directly part of the latter.

According to an embodiment of the present invention, the gas meter **100** comprises one or more communication units **CU(j)** (j = 1, 2, ..) controlled by the control unit **115** to transmit measurement data *M* to the gas supplier exploiting a corresponding wireless transmission technology. According to an exemplary and non-limiting embodiment, the communication units **CU(j)** comprise a communication unit configured to transmit the measurement data *M* using Narrowband Internet of Things (NBIoT) technology, a communication unit configured to transmit the measurement data *M* using Bluetooth Low Energy (BLE) technology and a communication unit configured to transmit the measurement data M using Long Range (LoRa) technology. However, the concepts of the present invention are applicable to cases with a different number of communication units **CU(j)** (e.g., with a single communication unit **CU(j))** and to different wireless transmission technologies.

According to an embodiment of the present invention, the gas meter **100** comprises a power supply unit **135,** e.g., comprising one or more batteries **B(k),** to supply electrical energy to the electrical/electronic/electromechanical components of the gas meter **100.**

According to an embodiment of the present invention, the power supply unit **135** may comprise at least one communication battery **B(1)** to power the communication units **CU(j),** and a metrological battery **B(2)** to power the elements of the gas meter **100** dedicated to generating and managing the measurement data *M*. The concepts of the present invention are nonetheless applicable to cases with a different number of batteries **B(k)** (e.g., with a number of batteries greater than two, comprising a battery dedicated to activation of the user interface **125** and/or one for activation of the valve **104,** or also with a single battery to power all components of the meter).

According to an embodiment of the present invention, each battery **B(k)** is coupled to a respective electronic measuring device **FG(k)** of the quantity of electric charge supplied by the battery **B(k).**

According to a further embodiment, a single electronic measuring device **FG(k)** may be provided, coupled to a plurality of batteries **B(k),** for measuring the quantity of electric charge delivered by such batteries **B(k).**

According to an embodiment of the present invention, the measuring device **FG(k)** is a device configured to periodically sample the voltage and the current requested of the respective battery **B(k)** and to calculate the quantity of electric charge *Q* delivered by the battery **B(k)** on the basis of the sampled voltage and current values.

According to an embodiment of the present invention, the measuring device **FG(k)** comprises an internal register on which the measuring device **FG(k)** stores and periodically updates a value of quantity of charge *Q* delivered by the battery **B(k)** calculated on the basis of the samples taken.

According to an embodiment of the present invention, the measurement device **FG(k)** is further capable of measuring and periodically also sampling the temperature of the respective battery **B(k).**

According to an embodiment of the present invention, the measurement device **FG(k)** is a device of the fuel gage type, e.g., such as the MAX17260 fuel gage developed by Analog Devices, Inc.

As will be described in detail below, according to an embodiment of the present invention, the control unit **115** is configured to periodically read the internal register of the measuring device **FG(k)** and calculate the residual capacity of the respective battery **B(k)** using the value of quantity of charge *Q* delivered stored in the internal register. As will be described in detail hereinafter, according to an embodiment of the present invention, the residual capacity of the batteries **B(k)** is calculated by the control unit **115** by performing normalization operations which take into account one or more of the average current requested from the batteries **B(k),** the temperature of the batteries **B(k)** and the current consumed by the **FG(k)** measuring devices themselves.

According to an embodiment of the present invention, the sampling frequency used by the measuring device **FG(k)** to sample the voltage and the current is settable to multiple values, as a function of the operations performed by the gas meter **100.**

In particular, according to an embodiment of the present invention, each measurement device **FG(k)** is configured to sample the voltage and the current of the respective battery **B(k):**
- at a first sampling frequency *F1* when the gas meter **100** is in a basic operating condition, in which the gas meter **100** performs only the operations for generating and managing the measurement data *M*, and
- at a second sampling frequency *F2 > F1* when the gas meter **100** is in an extended operating condition, in which the gas meter **100** performs, in addition to the normal operations for generating and managing the measurement data M, one or more of the following additional activities: transmitting the measurement data M by means of a communication unit **CU(j),** activating the user interface **125,** actuating the valve **104.**

According to an embodiment of the present invention, in the basic operating condition, any additional sensor devices of the gas meter **100,** such as pressure sensors, temperature sensors, and acceleration sensors, operate in a stand-by state.

According to an embodiment of the present invention, the extended operating condition may further be triggered by the exceeding of stand-by thresholds by any additional sensor devices of the gas meter **100,** e.g., such as exceeding temperature pre-alarm and alarm thresholds and/or exceeding an accelerometry background noise filtering threshold.

In the basic operating mode, the electrical consumptions of the gas meter **100** are lower, and of an approximately constant value, while in the extended operating mode, the electrical consumption of the gas meter **100** is subject to increases with respect to the value of the basic operating mode, due to the operation of electrical/electronic/electromechanical components of the gas meter **100** (hereinafter, simply identified as "additional electrical components"), such as communication unit **CU(j),** user interface **125** and/or valve **104,** for the performance of respective additional activities (additional with respect to generating and managing the measurement data *M*).

According to an embodiment of the present invention, said additional electrical components may further include any additional sensor devices, such as pressure sensors, temperature sensors, and acceleration sensors.

According to an exemplary embodiment of the present invention, the first sampling frequency *F1* corresponds to a sampling period equal to 5000-6000 ms, e.g., 5500 ms, while the second sampling frequency *F2* corresponds to a sampling period equal to 130-190 ms, e.g., 150 ms.

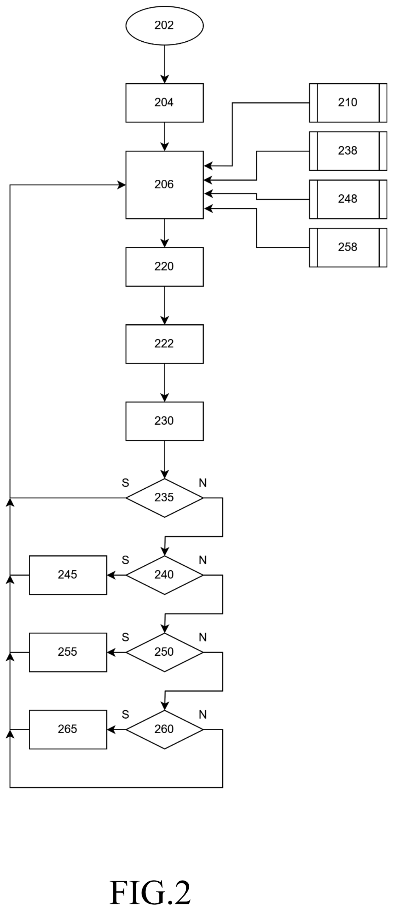

**Figure 2** shows, in terms of functional blocks, the operations executed by the control unit **115** for calculating the residual capacity of a battery **B(k)** of the meter **100** according to an embodiment of the present invention.

According to an embodiment of the present invention, the operations executed by the control unit **115 ,** illustrated in **Figure 2****,** are executed in parallel for each of the batteries **B(k)** of the gas meter **100.**

According to an embodiment of the present invention, following switch on of the gas meter **100** (block **202),** the control unit **115** performs an initializing step (block **204).**

According to an embodiment of the present invention, in the initializing step, the control unit **115** sets the operation of the gas meter **100** in the basic operating condition, in which the gas meter **100** performs only the operations for generating and managing the measurement data *M* on the basis of the data collected by the sensor **120** for the measurement of the gas flow.

According to an embodiment of the present invention, in the initializing step, the control unit **115** also activates the measurement device **FG(k),** setting its operation to the first sampling frequency *F1.*

According to an embodiment of the present invention, in the initializing step, the control unit **115** further writes in a register (e.g., stored in the memory unit **130)** an initial residual capacity value *CRB(k)* of the battery **B(k),** e.g., equal to the declared maximum capacity of the battery **B(k)** if the battery **B(k)** is a new battery.

According to an embodiment of the present invention, the control unit **115** enters an event waiting condition (block **206),** and remains in the waiting step until an event *EV* occurs. During the waiting condition, the measuring device **FG(k)** continues to periodically sample (at the set sampling frequency) the voltage and the current requested from the battery **B(k),** calculates the quantity of electric charge *Q* delivered by the battery **B(k)** on the basis of the sampled values of voltage and current, and updates the calculated value on its own internal register.

According to an embodiment of the present invention, the events *EV* which may cause the exit from the event waiting condition comprise the expiry of a reading period of the measuring device *RP* (block **210).** For example, the reading period *RP* may be set to a time period corresponding to a predetermined quantity of hours, e.g., such as equal to four hours.

Thereby, in the absence of occurrences of other types of events *EV,* the control unit **115** periodically exits the event waiting condition upon each expiration of the reading period *RP.*

As will be described in detail in the following of the present description, according to an embodiment of the present invention, the events *EV* which may cause exit from the event waiting condition comprise other types of events, such as the start or the end of specific activities, or the expiration of periods triggered by the end of such activities.

According to an embodiment of the present invention, upon the occurrence of an event *EV,* the control unit **115** exits the event waiting condition, and accesses the internal register of the measurement device **FG(k)** to retrieve the updated value of quantity of electric charge *Q* delivered by the battery **B(k)** calculated by the measurement device **FG(k)** (block **220).**

According to an embodiment of the present invention, the control unit **115** subjects the retrieved value quantity of electric charge *Q* to a normalization procedure (block **222).**

According to an embodiment of the present invention, the normalization procedure provides normalizing the retrieved value of quantity of electric charge *Q* on the basis of the temperature of the battery **B(k).** As described above, the value of the temperature of the battery **B(k)** may be measured by the measurement device **FG(k)** itself.

In addition to or instead of the normalization based on the battery temperature, according to an embodiment of the present invention, the normalization procedure may provide normalizing the retrieved value of electric charge quantity *Q* on the basis of the value of average current delivered by the battery **B(k)** during the period elapsed between the occurrence of the current *EV* event and the occurrence of the previous *EV* event.

According to an embodiment of the present invention, the control unit **115** updates the value of the residual capacity *CRB(k)* of the battery **B(k)** stored in the memory unit **130** on the basis of the value of quantity of electric charge *Q* retrieved (and normalized) (block **230).**

According to an embodiment of the present invention, the value of the residual capacity *CRB(k)* is updated by subtracting from the value of the residual capacity *CRB(k)* stored in the memory unit **130** the value of quantity of electric charge Q recovered (and normalized).

According to an embodiment of the present invention, in order to increase the accuracy of the measurement of the residual capacity *CRB(k)* of the battery **B(k),** the control unit **115** also subtracts from the value of the residual capacity *CRB(k)* stored in the memory unit **130** an estimate *FGS* of the electric consumption of the measuring device **FG(k)** itself during the period elapsed between the occurrence of the current event *EV* and the occurrence of the previous event *EV.* For example, the estimate *FGS* of the electric consumption of the measuring device **FG(k)** is calculated taking into account the period elapsed between the occurrence of the current event *EV* and the occurrence of the preceding event *EV,* and a mean value of current drawn by the measuring device **FG(k),** verified in a step of testing, taking into account the sampling frequency used by the measuring device **FG(k)** during such period.

For example, with reference to a measurement device **FG(k)** such as the fuel gage MAX17260, with a sampling frequency equal to the first sampling frequency *F1* (corresponding to a sampling period of 5500 ms), the average value of current drawn by the measurement device **FG(k)** is 5 - 12 uA, while with a sampling frequency equal to the second sampling frequency *F2* (corresponding to a sampling period of 150 ms), the average value of current drawn by the measurement device **FG(k)** is 15 - 30 uA.

According to an embodiment of the present invention, after updating the residual capacity value *CRB(k)* of the battery **B(k),** the control unit **115** verifies the operating condition of the gas meter **100** (block **235).**

If the gas meter **100** is in the basic operating condition (output branch **S** of block **235),** in which the gas meter **100** performs only the operations for generating and managing the measurement data M, the control unit **115** re-enters the event waiting condition (return to block **206).**

According to an embodiment of the present invention, the events *EV* which may cause the exit from the event waiting condition further comprise the start of an additional activity *AA* which is executed by the gas meter **100** (block **238).** According to an embodiment of the present invention, such additional activity *AA* may be either:
- a transmission of the measurement data *M* by means of a communication unit **CU(j),**
- an activation of the user interface **125,** e.g., following interaction of a user or operator with the user interface **125,**
- an actuation of the valve **104,** e.g., to enable/disable the ingress of the gas into the measurement chamber **110.**

According to an embodiment of the present invention, such additional activity *AA* may additionally involve activating the operation of any additional sensor devices of the gas meter **100** (such as pressure, temperature, and acceleration sensors), which causes the exceeding of corresponding stand-by thresholds.

According to an embodiment of the present invention, following the occurrence of an event *EV* which provides for the start of an additional activity *AA,* the gas meter **100** enters the extended operating condition, indicative of the fact that the gas meter **100** executes, in addition to the normal operations for generating and managing the measurement data *M,* the additional activity *AA,* and the control unit **115** exits the event waiting condition, and executes the operations already described above for:
- retrieving the updated value of quantity of electric charge *Q* delivered by the battery **B(k)** calculated by the measurement device **FG(k)** (block **220),**
- normalizing the retrieved value of quantity of electric charge *Q* (block **222),** and
- updating the value of the residual capacity *CRB(k)* of the battery **B(k)** stored in the memory unit **130** on the basis of the value of quantity of electric charge *Q* retrieved (and normalized) (block **230).**

According to an embodiment of the present invention, after updating the residual capacity value *CRB(k)* of the battery **B(k),** the control unit **115** verifies the operating condition of the gas meter **100** (block **235).**

Following the initiation of the additional activity *AA,* the gas meter **100** is no longer in the basic operating condition, but rather in the extended operating condition (output branch **N** of block **235).** At this point, according to an embodiment of the present invention, the control unit **115** verifies whether the event *EV* that has just occurred is an event indicative of the start of an additional activity *AA* (block **240).**

According to an embodiment of the present invention, if the control unit **115** determines that the event *EV* that has just occurred is an event indicative of the start of an additional activity *AA* (output branch **S** of block **240),** the control unit **115** sets the sampling frequency of the measuring device **FG(k)** to the second sampling frequency *F2,* greater than the first sampling frequency *F1* (block **245),** and then re-enters the event waiting condition (return to block **206).**

According to an embodiment of the present invention, the events *EV* that may cause the exit from the event waiting condition further comprise the end of the execution of one of the additional activities *AA* mentioned previously (block **248).**

According to an embodiment of the present invention, following the occurrence of an event *EV* that provides for the end of an additional activity *AA,* the control unit **115** exits the event waiting condition, and performs the operations already described above for:
- retrieving the updated value of quantity of electric charge *Q* delivered by the battery **B(k)** calculated by the measurement device **FG(k)** (block **220),**
- normalizing the retrieved value of quantity of electric charge *Q* (block **222),** and
- updating the value of the residual capacity *CRB(k)* of the battery **B(k)** stored in the memory unit **130** on the basis of the value of quantity of electric charge *Q* retrieved (and normalized) (block **230).**

As will be described hereinafter, according to an embodiment of the present invention, in order to allow the time necessary for the currents involved to stabilize following the end of an additional activity *AA,* the gas meter **100** is temporarily maintained in the extended operating condition for a respective guard time interval *RT* starting from the occurrence of the end of the additional activity *AA.*

Again, in this case, according to an embodiment of the present invention, after updating the value of the residual capacity *CRB(k)* of the battery **B(k),** the control unit **115** verifies the operating condition of the gas meter **100** (block **235).**

Following the previous start of the additional activity *AA* which has now ended, the gas meter **100** is still in the extended operating condition (output branch **N** of block **235).** At this point, according to an embodiment of the present invention, the control unit **115** verifies whether the event *EV* that has just occurred is an event indicative of the start of an additional activity *AA* (block **240).**

According to an embodiment of the present invention, if the control unit **115** determines that the event *EV* that has just occurred is not an event indicative of the start of an additional activity *AA* (outlet branch **N** of block **240),** the control unit **115** verifies whether the event *EV* that has just occurred is an event indicative of the end of an additional activity *AA* (block **250).**

According to an embodiment of the present invention, if the control unit **115** determines that the event *EV* that has just occurred is an event indicative of the end of an additional activity *AA* (output branch **S** of block **250),** the control unit **115** activates a timer corresponding to a guard time interval *RT* sufficient for stabilizing the currents to be measured (block **255).** According to an embodiment of the present invention, given that the current values required from the battery **B(k)** by the execution of an additional activity *AA* depend on the specific type of additional activity *AA,* the duration of the guard time interval *RT* depends on the type of additional activity *AA* which has been terminated.

According to an embodiment of the present invention, the control unit **115** then returns to the event waiting condition, still maintaining the sampling frequency of the measuring device **FG(k)** at the second sampling frequency *F2* (return to block **206).**

According to an embodiment of the present invention, the events EVthat may cause the exit from the event waiting condition further comprise the expiration of the guard time interval *RT* (block **258).**

According to an embodiment of the present invention, following the occurrence of an event *EV* that involves the expiration of the guard time interval *RT,* the control unit **115** exits the event waiting condition, and performs the operations already described above for:
- retrieving the updated value of quantity of electric charge *Q* delivered by the battery **B(k)** calculated by the measurement device **FG(k)** (block **220),**
- normalizing the retrieved value of quantity of electric charge *Q* (block **222),** and
- updating the value of the residual capacity *CRB(k)* of the battery **B(k)** stored in the memory unit **130** on the basis of the value of quantity of electric charge *Q* retrieved (and normalized) (block **230).**

Again, in this case, according to an embodiment of the present invention, after updating the value of the residual capacity *CRB(k)* of the battery **B(k),** the control unit **115** verifies the operating condition of the gas meter **100** (block **235).**

Following the previous start of the additional activity *AA* that has now ended, the gas meter **100** is still in the extended operating condition (output branch **N** of block **235).** At this point, according to an embodiment of the present invention, the control unit **115** verifies whether the event *EV* that has just occurred is an event indicative of the start of an additional activity *AA* (block **240).**

According to an embodiment of the present invention, if the control unit **115** determines that the event *EV* that has just occurred is not an event indicative of the start of an additional activity *AA* (outlet branch **N** of block **240),** the control unit **115** verifies whether the event *EV* that has just occurred is an event indicative of the end of an additional activity *AA* (block **250).**

According to an embodiment of the present invention, if the control unit **115** determines that the event *EV* that has just occurred is not an event indicative of the end of an additional activity *AA* (outlet branch **N** of block **250),** the control unit **115** checks whether the event *EV* that has just occurred is an event indicative of the expiration of the guard time interval *RT* (block **260).**

According to an embodiment of the present invention, if the control unit **115** determines that the event *EV* that has just occurred is an event indicative of the expiry of the guard time interval *RT* (output branch **S** of block **260),** the gas meter **100** enters the basic operating condition, the control unit **115** sets the sampling frequency of the measurement device **FG(k)** to the first sampling frequency *F1,* smaller than the second sampling frequency *F2* (block **265),** and then re-enters the event waiting condition (return to block **206).**

According to an embodiment of the present invention, if the control unit **115** determines that the event *EV* that has just occurred is not an event indicative of the expiration of the guard time interval *RT* (outlet branch **N** of block **260),** the control unit **115** re-enters the event waiting condition (return to block **206).**

According to an embodiment of the present invention, if the gas meter **100** must perform two or more additional activities *AA* in superposition (e.g., an occurrence of an additional activity start event *AA* relating to a new activity having occurred before the occurrence of an additional activity end event *AA* relating to another activity already underway), before causing the gas meter **100** to enter the basic operating condition and setting the sampling frequency of the measurement device **FG(k)** to the first sampling frequency *F1,* the control unit **115** waits until all the guard time intervals *RT* relating to all the additional activities *AA* underway have expired.

According to an embodiment of the present invention, if the reading period *RP* expires while an additional activity *AA* is still in progress, the control unit **115** is kept in the event waiting condition (block **206)** and the value of electric charge quantity *Q* calculated by the measuring device **FG(k)** is not read, because the value was read already at the beginning of the additional activity *AA.*

The calculation of the residual capacity of the battery **B(k)** according to the embodiment of the present invention described with reference to the **Figure 2** may be summarized as follows.

In the absence of occurrences of additional activities *AA* - such as transmission of measurement data *M* by means of communication unit **CU(j),** activation of the user interface **125,** actuation of the valve **104** (and possibly an activation of an operation of possible additional sensor devices, such as pressure, temperature and acceleration sensors, which causes the exceeding of corresponding stand-by thresholds) -, the control unit **115** updates the value of the residual capacity *CRB(k)* of the battery **B(k)** periodically, by reading the value of the quantity of electric charge *Q* delivered by the battery **B(k),** calculated by the measuring device **FG(k),** at each reading period *RP* (e.g., every 4 hours). In this condition, the value of quantity of electric charge *Q* delivered by the battery **B(k),** calculated by the measuring device **FG(k),** is updated at a frequency corresponding to the first frequency *F1.*

When the gas meter **100** performs an additional activity *AA* - such as a transmission of measurement data *M* by means of communication unit **CU(j),** an activation of the user interface **125,** an actuation of the valve **104** (and possibly an activation of an operation of possible additional sensor devices, such as pressure, temperature and acceleration sensors, which causes the exceeding of corresponding stand-by thresholds) -, the control unit **115** updates the value of the residual capacity *CRB(k)* of the battery **B(k)** three times, and in particular reading the value of quantity of electric charge *Q* delivered by the battery **B(k)** calculated by the measuring device **FG(k):**
1) at the beginning of the additional activity *AA,*
2) at the end of the additional activity *AA* and
3) once the guard time interval *RT* has elapsed.

In this condition, the value of quantity of electric charge *Q* delivered by the battery **B(k),** calculated by the measuring device **FG(k),** is updated at a frequency corresponding to the second frequency *F2*.

With respect to the known solutions, which make it possible to obtain only an estimate of the duration of the batteries, the solution according to the embodiments of the invention described herein makes it possible to obtain a calculation of the actual residual capacity of the batteries.

Knowing the actual residual capacity of the batteries has several advantages with respect to known solutions that provide only an estimate.

First of all, while estimates cannot take into account the occurrence of particular events which may alter the consumption of the batteries, such as the occurrence of additional activities not foreseen, knowledge of the actual residual capacity of the batteries prevents the batteries of the gas meter **100** from discharging in a manner not foreseen, preserving the correct operation of the gas meter.

Further, being aware of the actual residual capacity of the batteries, it is possible to provide for the intervention of operators, e.g., for replacement of the batteries, only when necessary.

According to the suggested solution, the sampling frequency of the measuring device **FG(k)** is variable, and therefore it is advantageously possible to use a lower sampling frequency (the first sampling frequency *F1*) during the basic operating condition, when the consumption of the meter components is constant, and to use a greater sampling frequency (the second sampling frequency *F2*) only in conjunction with additional activities that involve greater consumption. Thereby, it is possible to assess the quantity of charge *Q* delivered by the batteries **B(k)** in a sufficiently accurate manner, without having to perform an excessively high number of samplings, and thus reducing the electrical consumption caused by the operation of the measurement device **FG(k)** itself.

In particular, given that the gas meter **100** will primarily operate in the basic operating condition (the execution of the additional activities *AA* which cause the gas meter **100** to operate in the extended operating condition indeed covers a very small fraction of the overall operating life of the meter, e.g., less than 1%), the sampling frequency of the measurement device **FG(k)** used will mainly be the first sampling frequency *F1,* and therefore the contribution to battery consumption due to the measurement device **FG(k)** itself will be reduced. Consequently, any errors of the estimate *FGS* of the electric consumption of the measuring device **FG(k)** will contribute in a negligible manner to the calculation of the residual capacity *CRB(k)* of the battery **B(k)** (e.g., for a fraction smaller than 2.5% of the total battery duration).

The solution according to the embodiments of the invention described herein provides for a continuous and detailed measurement of the electric current consumed by the components of the gas meter **100.** By virtue of this knowledge, it is advantageously possible to identify some fault conditions, or unforeseen abnormal behaviors of some components of the gas meter **100,** identifiable, for example, by the presence of overconsumption caused by components of the gas meter **100** under certain operating conditions.

An exemplary and non-exhaustive list of failures or anomalous behaviors detectable from the analysis of the detected electric current comprises:
- anomalies in the operation of the control unit **115;**
- malfunctions of the sensor **120** for the measurement of gas flow;
- excessive leakage of the electrical circuitry responsible for the operations for the generation of the measurement data *M*;
- anomalous behaviors during the actuation of the valve **104;**
- malfunctions of the user interface **125;**
- anomalies in the operation of the communication units **CU(j);**
- malfunctions of any additional sensor devices, such as pressure sensors, temperature sensors, and acceleration sensors.

Of course, to meet local and specific requirements, a person skilled in the art can apply various logical and/or physical modifications and alterations to the above invention. More specifically, although the present invention has been described with some degree of particularity with reference to its preferred embodiment, it should be understood that various omissions, substitutions, and modifications in form and detail, and other embodiments are possible. In particular, various embodiments of the invention may also be put into practice without the specific details given in the preceding description to provide a deeper understanding of it; conversely, well-known functions may have been omitted or simplified so as not to burden the description with unnecessary details.

## Claims

1. A gas meter **(100)** comprising:
- a gas measuring system **(115, 120, 130)** configured to generate measurements indicating gas deliveries;
- one or more additional electrical components **(CU(j), 125, 104)** each configured to perform a respective additional activity, said additional activity being different from said generating measurements indicating gas deliveries;
- a supply unit **(135)** comprising one or more batteries **(B(k))** for supplying said gas measuring system **(115, 120, 130)** and said one or more additional electric components **(CU(j), 125, 104);**
- a battery capacity calculation system **(115, FG(k))** configured to calculate a residual capacity of said one or more batteries **(B(k)),** said battery capacity calculation system **(115, FG(k))** comprising at least one electronic measuring device **(FG(k))** of a quantity of electric charge delivered by a respective one of said one or more batteries **(B(k)),** said electronic measuring device **(FG(k))** being configured to periodically sample at least one between the voltage and the current requested from the respective battery **(B(k))** and to calculate a quantity of electric charge delivered by such battery **(B(k))** on the basis of sampled values obtained from said periodic sampling of at least one between the voltage and the current,
**characterized in that**
said battery capacitance calculation system **(115, FG(k))** is configured to set a sampling frequency of said at least one electronic measuring device **(FG(k))** at:
- a first sampling frequency value when the gas meter **(100)** is in a basic operating condition, in which none of said one or more additional electric components **(CU(j), 125, 104)** is performing said respective additional activity, and
- a second sampling frequency value greater than the first sampling frequency value when the gas meter **(100)** is in an extended operating condition, in which at least one of said one or more additional electric components **(CU(j), 125, 104)** is performing said respective additional activity.

2. A gas meter **(100)** according to claim 1, wherein:
- said electronic measuring device **(FG(k))** is configured to store and periodically update in a register a value of said quantity of electric charge delivered by the battery calculated based on the samplings performed;
- said gas measuring system **(115, 120, 130)** comprises a control unit **(115)** configured to:
- access said register to retrieve the updated value of said quantity of electric charge delivered by the battery in response to the occurrence of an event;
- calculate said residual capacitance of said one or more batteries **(B(k))** using said retrieved updated value;
- said event comprises at least one selected from:
- the expiry of a predetermined reading period);
- the beginning of an additional activity) by one or more of said additional electric components;
- the end of an additional activity) by one or more of said additional electric components;
said event further possibly comprising the expiry of a guard time interval, said guard time interval starting from the occurrence of an end of an additional activity.

3. A gas meter **(100)** according to claim 2, wherein:
- said electronic measuring device **(FG(k))** is configured to also measure a temperature of the respective battery **(B(k));**
- said control unit **(115)** is configured to normalize said retrieved updated value based on said temperature measured.

4. A gas meter **(100)** according to claim 2 or 3, wherein said control unit **(115)** is configured to normalize said retrieved updated value based on an mean current value delivered by the respective battery **(B(k))** during a period elapsed between:
- the occurrence of the event in response to which the control unit accessed the register, and
- the occurrence of a previous event.

5. A gas meter **(100)** of any one of claims 2 to 4, wherein said control unit **(115)** is configured to:
- estimate an electric consumption of the electronic measuring device **(FG(k));**
- calculate said residual capacitance (of said one or more batteries **(B(k))** using, in addition to said retrieved updated value, also said estimated electric consumption of the electronic measuring device **(FG(k)).**

6. A gas meter **(100)** of any one of the preceding claims, wherein:
- said one or more additional electric components **(CU(j), 125, 104)** comprise at least one communication unit **(CU(j));**
- said respective additional activity comprises a transmission of said measurements indicating gas deliveries by said at least one communication unit **(CU(j))** through a corresponding wireless transmission technology.

7. A gas meter **(100)** of any one of the preceding claims, wherein:
- said one or more additional electric components **(CU(j), 125, 104)** comprise a user interface **(125);**
- said respective additional activity comprises an activation of said user interface **(125).**

8. A gas meter **(100)** of any one of the preceding claims, wherein:
- said one or more additional electric components **(CU(j), 125, 104)** comprise a valve **(104)** provided at a gas inlet duct with the gas meter **(100);**
- said respective additional activity comprises an actuation of said valve **(104)** to selectively enable/disable the inlet of the gas through said gas inlet duct of the gas meter **(100).**

9. A gas meter **(100)** of any one of the preceding claims, in which said electronic measuring device **(FG(k))** is a fuel gauge type measuring device.

10. A gas meter **(100)** of any one of the preceding claims, wherein:
- said one or more additional electric components **(CU(j), 125, 104)** further comprise one or more additional sensor devices configured to measure at least one of a temperature, a pressure and an acceleration;
- said respective additional activity comprises an activation of at least one of said additional sensor devices which causes the exceeding a corresponding standby-by threshold of said additional sensor device.
